(19)

Europäisches Patentamt
European Patent Office
Office européen des brevets

(11) **EP 1 470 549 B1**

(12) **EUROPEAN PATENT SPECIFICATION**

(45) Date of publication and mention
of the grant of the patent:
**10.04.2019 Bulletin 2019/15**

(21) Application number: **01991007.4**

(22) Date of filing: **12.12.2001**

(51) Int Cl.:
*G06F 21/31* (2013.01)   *G10L 15/00* (2013.01)
*G06F 21/32* (2013.01)

(86) International application number:
**PCT/US2001/047910**

(87) International publication number:
**WO 2003/050799 (19.06.2003 Gazette 2003/25)**

(54) **METHOD AND SYSTEM FOR NON-INTRUSIVE SPEAKER VERIFICATION USING BEHAVIOR MODELS**

VERFAHREN UND SYSTEM ZUR EINGRIFFSFREIEN SPRECHERVERIFIKATION UNTER VERWENDUNG VON VERHALTENSMODELLEN

PROCÉDÉ ET DISPOSITIF DE VÉRIFICATION DISCRÈTE DES LOCUTEURS AU MOYEN DE MODÈLES COMPORTEMENTAUX

(84) Designated Contracting States:
**AT BE CH CY DE DK ES FI FR GB GR IE IT LI LU MC NL PT SE TR**

(43) Date of publication of application:
**27.10.2004 Bulletin 2004/44**

(73) Proprietor: **Nuance Communications, Inc.**
**Burlington, MA 01803 (US)**

(72) Inventors:
• **RAMASWAMY, Ganesh, N.**
**Ossining, NY 10562 (US)**
• **CHAUDHARI, Upendra, V.**
**Elmsford, NY 10523 (US)**

(74) Representative: **Driver, Virginia Rozanne et al**
**Page White & Farrer**
**Bedford House**
**John Street**
**London WC1N 2BF (GB)**

(56) References cited:
**WO-A-95/18441    WO-A-97/23816**
**NL-A- 9 200 297    US-A- 5 647 834**
**US-A- 5 897 616    US-A- 6 006 188**
**US-A- 6 134 657    US-A- 6 151 571**

• **LUNT T F ET AL: "A PROTOTYPE REAL-TIME INTRUSION-DETECTION EXPERT SYSTEM" 18 April 1988 (1988-04-18), PROCEEDINGS OF THE SYMPOSIUM ON SECURITY AND PRIVACY. OAKLAND, CALIFORNIA, APRIL 18 - 21, 1988, WASHINGTON, IEEE COMP. SOC. PRESS, US, PAGE(S) 59-66 , XP000043596 * the whole document ***

EP 1 470 549 B1

**Description**

**Background of the Invention**

1. Field of the Invention

The present invention relates to natural language understanding systems, and more particularly to a method and system for non-intrusively verifying a user based on behavior of the user.

**2. Description of the Related Art**

Traditional methods for speaker verification (or identification) rely on specific inputs from the user for the sole purpose of the verification. These methods may include providing speech samples and answering biometric questions. Once verified, the speaker is permitted to access the target system, and typically no further verification is performed. Even if additional verification is performed, it requires more specific inputs from the user for the purpose of verification. This is intrusive to the user.

WO 95/18441 describes a system in which a speaker verification element is arranged to construct a model of vocal characteristics which are contained in a command issued by the user. The vocal characteristics of the speech commands are matched with previously stored vocal characteristics to thereby determine that a person using the system that asserted the identifier is the same that is issuing the command.

Prior art speaker verification systems (or user verification systems, for systems without a spoken input modality) validate the identity of a given user on the basis of one or more of the following criteria:

1, Who the user is, which may be determined by the user's voice, fingerprint, handwriting, etc.

2, What the user knows, which may be determined by a password, or answers to some biometric questions (e.g., what is the mother's maiden name?}, etc.

3, What the user possesses, such as an identification document, a key, a cellular phone with a particular number, etc.

All of the above methods for verification may be defeated if .an imposter knows or possesses the information, such as 'the key or a maiden name, etc.

Therefore, a need exists for a method and system for determining an identity of a user based on the user's behavior. A further need exists for a non-intrusive user verification system.

**SUMMARY OF THE INVENTION**

A system for verifying user identity, in accordance with the present invention, includes a conversational system for receiving inputs from a user and transforming the inputs into formal commands by a natural language understanding unit. The system is characterised by a behavior verifier for performing verification of a user's identity during usage coupled to the conversational system and including a feature extractor for extracting a set of features from the inputs and constructing a feature vector. The set of features include language model scores characterizing the user's choice of words. The behavior verifier is adapted to compare the user's input behavior to a behavior model to determine if the user is authorized to interact with the system.

The inputs may include at least one speech, handwriting, text, and gestures.

The behavior model may include a plurality of models. The behavior verifier may include a probability calculator. The probability calculator may be adapted to calculate a first probability that the user is authorized to interact with the system based on the user's behavior. The behavior verifier may include a model constructor for constructing the behavior model for a user, the behavior model being employed by the probability calculator to compare behavior to current behavior of the user. The system may further include an acoustic and biometric verifier for determining acoustic and biometric information from the user and determining a second probability that the user is authorized to interact with the system based on the user's acoustic or biometric information, and the behavior verifier may include a probability mixer adapted for integrating the first probability with the second probability to verify that the user is authorized to interact with the system. The first probability may be compared to a threshold probability to determine if the user is authorized to use the system.

A method for verifying a user based on behavior as claimed in the appended claims 6-10.

The methods and method steps of the present invention may be implemented by a program storage device readable by machine, tangibly embodying a program of instructions executable by the machine to perform the method steps for verifying a user based on behavior.

These and other objects, features and advantages of the present invention will become apparent from the following detailed description of illustrative embodiments thereof, which is to be read in connection with the accompanying drawings.

## BRIEF DESCRIPTION OF DRAWINGS

The invention, will be described in detail in the following description of preferred embodiments with reference to the following figures wherein:

FIG. 1 is a block/flow diagram of an illustrative system/method employing behavior verification in accordance with the present invention; and
FIG. 2 is a block diagram of an illustrative behavior verifier in accordance with the present invention.

## DETAILED DESCRIPTION OF PREFERRED EMBODIMENTS

The present invention provides a method and system for continuously verifying the identity of the user based on how the user interacts with a target system. This may be performed by comparing the user's current behavior with past behavior. No additional dedicated input (beyond what is used for the initial verification) from the user is needed, and therefore the system is non-intrusive. Furthermore, verification can be done continuously, and if enough evidence is available for rejecting the user in the middle of a session, then the user can be cut-off before more damage is done.

In alternate embodiments, even the initial verification is not necessary, and all users may be given base level access (to non-confidential information, for example), and upon additional verification through the non-intrusive process, full access may be given.

In the present invention, a new dimension to the speaker (or user) verification paradigm is provided, by introducing a new criterion: how the user behaves. For example, a user who usually greets with a "Howdy," may be distinguished from an imposter who greets with a "Hello" or a "How are you," or from an imposter who begins the conversation without any greetings. Similarly, an imposter who is trying to search through several confidential documents may be distinguished from a legitimate user who does not typically perform such searches. Although anyone single interaction with the system may be insufficient to make a decision, information gathered after several user- system interactions may be sufficient to make a valid verification decision.

One of the advantages of the present invention is that the speaker verification is non-intrusive, in the sense that no additional dedicated input from the user is expected for the sole purpose of verification, and the user may interact with the system as usual, with the information needed for the verification being gathered automatically by a background process. The comparison of the user's current behavior with known past behavior is also completed automatically by the system without any intrusion or inconvenience to the user.

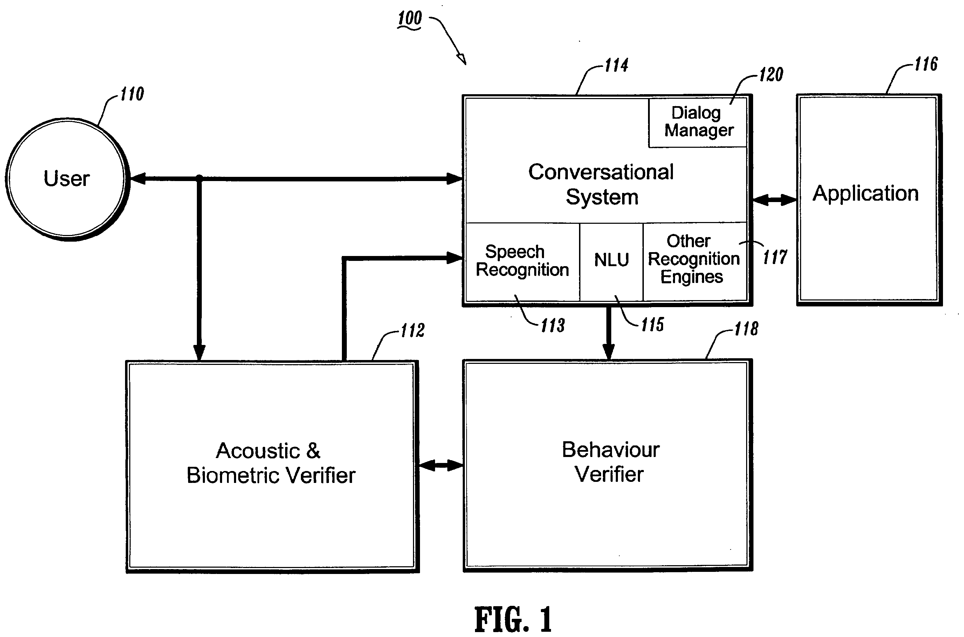

It should be understood that the elements shown in FIGS. 1-2 may be implemented in various forms of hardware, software or combinations thereof. Preferably, these elements are implemented in software on one or more appropriately programmed general purpose digital computers having a processor and memory and input/output interfaces. Referring now to the drawings in which like numerals represent the same or similar elements and initially to FIG. 1, an illustrative system/method for employing behavior verification is shown in accordance with the present invention. A target system 100, for which speaker verification is needed, is preferably capable of providing some parameters related to how a user 110 interacts with the system. For example, the system 100 may permit the user 110 to interact with the system using several different input modalities, such as typed text, spoken utterance, handwritten input, gestures, etc. Technologies such as speech recognition, handwriting recognition and image recognition, along with natural language understanding and dialog management may be used by the system 100 to interpret the user input and translate it to a form suitable for execution by the computer or computers of system 100. The system 100 may connect to a number of different applications 116, such as electronic mail, electronic calendar, banking, stock or mutual funds trading, travel services, spreadsheets, editing programs, etc., and allow the user to interact with these applications. System 100 may also provide the parameters needed to describe how the user interacts with the system, such as parameters related to speech recognition or natural language understanding.

As shown in FIG. 1, an example of the system 100 is shown including a behavior verifier 118. The input from the user 110 is expected to be a spoken utterance, but it may be in some other modality, such as a handwritten input, typed text, or gesture. When spoken input is used, a conversational system 114 first converts the spoken utterance into text using a speech recognition engine 113, which is known in the art. For example, if the application 116 is an electronic mail application, then the user might say, "do I have any new messages," and the spoken utterance is converted to the corresponding text string by the speech recognition engine. Inputs, not in spoken form, such as handwritten input, are also converted to the corresponding text string using appropriate technology, such as for example a handwriting recognition engine 117, known in the art. This is true for interpreting gestures or other modalities. An appropriated recognition engine, is employed. In this way, all inputs are converted to a recognizable form which is understood to system 100.

The text string or other formatted signal is then analyzed by a natural language understanding (NLU) engine 115 to be converted to a formal command, suitable for execution by the system 100 within the application 116. For example, sentences such as "do I have any new messages" or "can you check my mailbox," both of which carry the same meaning, may be translated to a formal command of the form: checkNewMail(). The formal command is then submitted to the application 116 for execution of the command. A dialog engine 120 or dialog manager may also be used to manage the dialog with the user, and to perform certain other functions such as ambiguity resolution.

The conversational system may therefore include speech and other input recognition engines, Natural Language Understanding (NLU) engine 115, and dialog engine 120. Methods for building a conversational system are known in the art.

An acoustic and biometric verifier 112 is included in system 100. Acoustic and biometric verifier 112 is responsible for identifying and verifying the identity of the user 110. The verification is nominally performed prior to allowing the user 110 to access the system 100. The verification process may include matching an acoustic signature of the person claiming to be a given user to the known acoustic signature of the claimed user, which is an acoustic verification process. The verification process may also include biometric verification whereby the person claiming to be the user is prompted for answers to specific questions, such as a password, mother's maiden name, social security number, etc. Methods for acoustic and biometric verification are well known in the art.

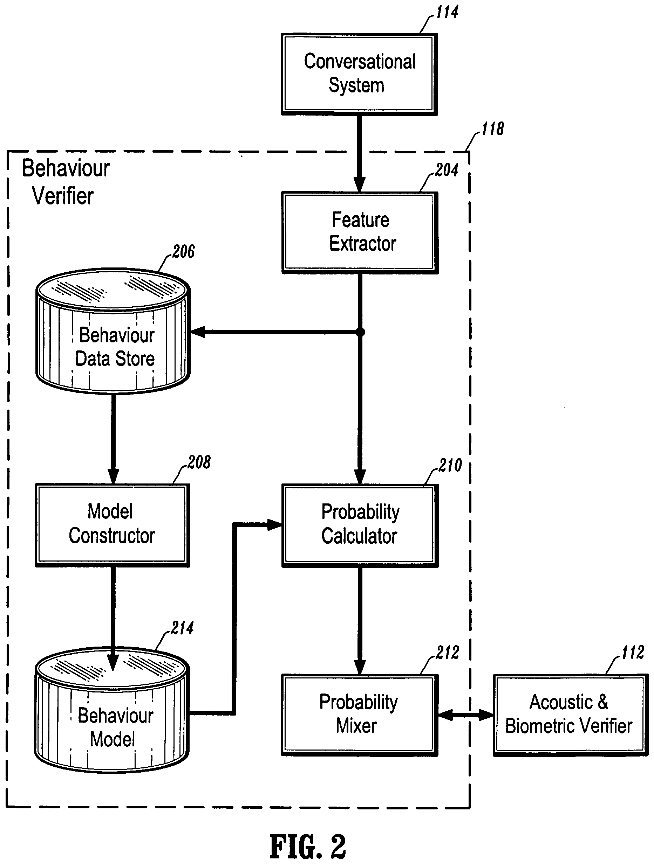

Behavior verifier 118, in accordance with the present invention, is responsible for performing additional verification of the user's identity continuously during usage. Details of behavior verifier are described below with reference to FIG. 2. Behavior verifier 118 receives inputs from both the conversational system 114 and the acoustic and biometric verifier 112, and provides its output to the acoustic and biometric verifier 112.

Referring to FIG. 2, a feature extractor 204 is responsible for extracting a set of features from the data provided by the conversational system 114, and constructing a feature vector v, which includes n features.

$$\mathbf{v} = [v_1 \ \ldots v_n] \qquad\qquad (1)$$

The value of n should be chosen by a system designer, and may depend on the type of accuracy and/or type of recognition needed for the system. The features $v_1 \ldots v_n$ extracted by feature extractor 204 includes language model scores of item feature 1 below and may include one or more of the item features 2-10 below or other similar features. The item features 2-10 are illustrative and not to be construed as limiting the present invention. Further, the features corresponding to the language model scores described herein may be used alone or in combination with other features to determine an appropriate feature vector(s) in accordance with the invention. The features include the language model scores of item 1 below and may include one or more of item features 2-10:

*1) Language model scores:* Speech recognition engines use a language model, or a set of language models, to perform the recognition. When more than one language model is used, some of the models may be personalized to a given user (sometimes known as the personal cache, built using words and phrases spoken frequently by a given user). Language model scores are generated and used internally, and discarded after the recognition is complete. However, these scores carry information that can characterize the user, particularly with respect to the choice of words and phrases often used. For example, if a user normally says "begin dictation," then an imposter who says "let us create the text for this message" can be detected. Similarly, a user who normally issues commands using brief and to-the-point phrases may be distinguished from an imposter who uses long sentences. Therefore, the language model scores may be saved and incorporated as features in the feature vector. It should be noted that an imposter need not be rejected based on a single phrase or phrases. Instead a cumulative behavioral score can be maintained for a given user session and periodically checked against a threshold to determine if the user is an imposter or not verified for using the system.

*2) Acoustic model scores:* Acoustic model scores (sometimes known as fast match scores and detailed match scores) and other intermediate outputs are used internally within the speech recognition engine, and discarded after the recognition. Similar to the language model scores, the acoustic model scores also include information relevant to characterizing a user, and any deviation from the normal range of scores for a given task may be detected and used to identify an imposter. Hence, it is useful to add the acoustic model to the feature vector.

*3) Natural language understanding (NLU) scores:* The NLU engine also generates internal scores which are discarded after the translation from text-to-formal command is complete. These scores also include information that may be useful in characterizing the user. The NLU engine usually includes two or more stages (such as a tagging stage and a translation stage), and all of these scores may be added to the feature vector so that any deviation from the normal range of scores for a given task may be detected.

In addition to these scores, other inputs such as the second choice of the formal command, or the second choice of tagged sentence from the intermediate stage of tagging may also be encoded as features. For example, a user may say "Open Steve," which may result in top-ranking formal command OpenMessage(name=Steve), corresponding to opening the message from Steve, and a second choice formal command OpenFolder (folder=Steve), corresponding to opening a folder called Steve. However, an imposter may be more clear, and say something like "Open the message from Steve," in which case the first choice formal command would likely be the same, but the second choice command may be different.

4) *Command prediction scores:* Users often exhibit a pattern in the sequence of commands which the users issue and the combination of commands frequently used to accomplish a task. A system that predicts the user's next command based on past behavior, such as the one described in commonly assigned U.S. Patent Application No. 09/431,034 entitled "Adaptive Command Predictor for a Natural Language Dialog System," to G. Ramaswamy and J. Kleindienst, filed on October 30, 1999, may be used to improve the accuracy of the conversational system and also for the system to take initiative and suggesting the next command to the user. However, in addition to these applications, the scores generated by the command prediction system are also useful in detecting an imposter. If a person issues a command that has never been used by the actual user (and hence will get a low command prediction score), or if the person issues a series of commands that were not part of the top ranking predicted commands (again the command prediction scores will be low), then the usual command or sequence of commands may indicate the presence of an imposter. Therefore, the command prediction scores are good features to be added to the feature vector.

5) *Pronunciation Model:* In most languages, there are certain words with more than one pronunciation. For example, in English, the word "the" has the following common pronunciation.

| | |
|---|---|
| the | \|DH AH |
| the | \|DH AX |
| the | \|DH IY |

Most users often use only one pronunciation for these words. An imposter who is unaware of the user's preferred pronunciation for certain words may use an alternative pronunciation. To detect the imposter in this case, the feature vector may include a set of features that encode the pronunciation used for these words.

6) Other *input scores:* If the system supports other input modalities such as handwriting recognition or image recognition, then the scores from these recognition engines can also be added to the feature verctor, similar to the language model and acoustic model scores from speech recognition.

7) *System responses:* Conversational systems not only accept spoken inputs from the user, but they maintain a dialog with the user and generate responses to be presented to the user. The system of the present invention may look at what responses the system typically generates for a user, and may use that information to detect an imposter. Responses such as "I could not find that message," "there is no such meeting," or "you do not own any shares in that mutual fund," could mean that the user has no knowledge of prior interactions with the system and could potentially be an imposter. Similarly, some users are very precise and may issue commands such as "send this to Steve Jones," which may not require additional clarification, but other users may be vague and issue the same command as "send this to Steve," which may require additional dialog for disambiguation. The system may prompt the user with a question of the form "do you mean Steve Jones or Steve Brown?". In this case, an imposter who is more precise or more vague than the actual user may be detected.

To use the system responses as feature in the feature vector, the standard system responses may be put in different categories (negative responses, positive responses, confirmation, clarification, etc.), and the identification of the category may be entered as a feature when a response is generated.

8) *Multi-modal interaction model:* For systems that support multi-modal inputs (speech, keyboard, mouse, handwriting, gesture, etc.), the combinations of the input modalities that the user typically uses may be analyzed in accordance with the present invention to accomplish a task, and detect an imposter who is using a different set of input modalities for the same task. For example, some users may prefer to click the "save" button to save a file, while others may prefer to use a spoken command for this task. Hence, it is useful to add the input modalities used to accomplish a certain task as additional features in the feature vector.

9) *Dialog state:* Some systems may permit the user to have multiple transactions being open at any given time (the user does not have to finish one task before moving to the next one). In this case, features can be added representing the number of transactions currently open, and the time that has passed since the oldest transaction started. This information may again be used to construct feature vectors which typify a given user. Dialog state may also include the type or duration of use of activities performed on the system. For example, a particular use may always access e- mail when logging onto a system and then check stock prices.

10) *Duration between commands:* Different users may interact with the system at different rates. However, a given user often exhibits regularities in the duration between commands, e.g., the time the user pauses between commands. Therefore, the duration between the end of the last command and the start of the present command may be entered explicitly as a feature.

All of the above features describe how the user may interact with the system. Additional features that may be available may also be characteristic of how a given user behaves. These additional features may be tailored by the system of the user at, for example, initialization of the system and may also be appended to the feature vector v. The conversational system 114 provides all the data needed to calculate v.

The feature extractor 204 extracts the feature vector v for every input from the user and sends it to both a behavior data store 206 and a probability calculator 210. The behavior data store 206 is used to store all the feature vectors collected for a particular user, and is used by a model constructor 208 to build a behavior model 214 for each authorized user. In one embodiment of the present invention, a simple behavior model is constructed, including only the mean vector m and the covariance matrix $\Sigma$, for the set of feature vectors (v's). In this case, the model constructor 208 calculates the mean vector m and the covariance matrix $\Sigma$ for a given user, when a sufficient number of samples of the feature vector v have been collected. The process is repeated periodically when a sufficient number of additional feature vectors are collected. The mean vector m and the covariance matrix $\Sigma$ are stored in the behavior model 214. Calculation of mean vectors and covariance matrices are known in the art. The feature vectors are continuously collected and the behavior model 214 is updated at periodic intervals, to accommodate for any gradual changes in the user's behavior.

The probability calculator 210 then calculates the probability P given, for example, by:

$$P = \frac{e^{-\frac{1}{2}(v-m)^T \Sigma^{-1}(v-m)}}{(2\pi)^{\frac{n}{2}}|\Sigma|^{\frac{1}{2}}}, \qquad (2)$$

describing the likelihood that the given input could have come from the correct user, based on the behavior model 214. Higher values of $P$ will correspond to greater likelihood that the input came from the correct or authorized user.

A probability mixer 212 takes the probability scores $P$ and performs two steps. First, it calculates the weighted average of the probability scores $P$ from EQ. (2) for the current input and a selected number of previous inputs. If the probability score for the current input is denoted as $P(t)$, and the score for the $i^{th}$ previous input as $P(t - i)$ for $i = 1, ..., m$, where m is the total number of prior inputs to be considered, then the probability mixer 212 may calculate the cumulative behavior score at the current instance, $P_b(t)$, given by

$$P_b(t) = \alpha_t P(t) + \alpha_{t-1} P(t-1) + ... + \alpha_{t-m} P(t-m) \qquad (3)$$

where the non-negative weights $\alpha_i$'s satisfy $\alpha_t + \alpha_{t-l} + ... + \alpha_{t-m} = 1$ and $\alpha_t \geq \alpha_{t-l} \geq ... \geq \alpha_{t-m} \geq 0$. The value of m is a system parameter that determines the number of previous probability scores to be considered, and may be chosen by the system designer. The intent of taking the average over several scores is to ensure that no single spurious score causes an incorrect decision to be made.

The second step to be performed by the probability mixer 212 is to further mix the behavior score $P_b(t)$ with an acoustic score (and/or biometric score) $P_\alpha(t)$ for the current input provided by the acoustic and biometric verifier 112 (FIG. 1). The acoustic score $P_\alpha(t)$ may be a standard acoustic score used in speaker verification, and may be calculated using the speech samples from the current user input, if the current user input is in spoken form (if the current input is not in spoken form, then other approximations, such as setting $P_\alpha(t)=P_\alpha(t-1)$ or to the acoustic score from the most recent past spoken input may be used). The probability mixer 212 calculates the overall score, $P_{total}(t)$, given by

$$P_{total}(t) = \beta_a P_a(t) + \beta_b P_b(t) \qquad (4)$$

where the non-negative weights $\beta_i$'s satisfy $\beta_\alpha + \beta_b = 1$, which may be chosen by the system designer, but may be later modified by the user based on his or her preferences.

The probability mixer 212 compares the value of $P_{total}(t)$ to a predetermined threshold $P_{th}$ and if $P_{total}(t) < P_{th}$, then a message is sent to the acoustic and biometric verifier 112 that the user may be an imposter. In one embodiment, the acoustic and biometric verifier 112 interrupts the user and asks the user to go through a more thorough verification process. If the additional verification fails, the user may no longer be permitted to use the system. If the additional verification is successful, then the user is permitted to interact with the system, until a future warning message is generated by the probability mixer 212.

In another embodiment, the user is permitted to continue to interact with the system, but is denied access to sensitive materials on the system. The material's sensitivity may include levels and the levels of access to sensitive materials may be based on a score relative to the threshold. For example, a group of employees may be permitted to access a system, however, some employees must be excluded from sensitive materials. The behavior of the employees may be employed to exclude non-authorized employees from the sensitive materials.

The threshold $P_{th}$ is a system parameter which may be chosen by the system designer. However, the threshold can be modified by the user according to the desired level of performance.

Another embodiment of the present invention will now be described. The model constructor 208 constructs two or more models and the collection is stored in the behavior model 214. To construct each of these models, the collection of feature vectors v is first partitioned into a number of clusters, using any standard clustering algorithm such as, for example, the well known K-means clustering algorithm. For each cluster $i$, the mean vector $m_i$ and the covariance matrix $\Sigma_i$ are calculated, and EQ. (2) is now modified to be

$$P = \max_i \left[ \frac{e^{-\frac{1}{2}(v-m_i)^T \Sigma_i^{-1}(v-m_i)}}{(2\pi)^{\frac{n}{2}}|\Sigma_i|^{\frac{1}{2}}} \right] \qquad (5)$$

The equations (3) and (4) remain the same, but they will use the value of $P$ calculated from equation (5) above. The purpose of constructing clusters of feature vectors is to accommodate different behaviors that may be exhibited by the same user at different times, corresponding for example to different tasks or different devices being used. Accordingly, instead of using the clustering algorithm, the clusters may be constructed explicitly on the basis of factors related to the interaction, such as the application being accessed (email, calendar, stock trading, etc.), the access device (telephone, cellular phone, notebook computer, desktop computer, personal digital assistant, etc.) or some other factor.

Having described preferred embodiments of a method and system for non-intrusive speaker verification using behavior models (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention as outlined by the appended claims. Having thus described the invention with the details and particularity required by the patent laws, what is claimed and desired to be protected is set forth in the appended claims.

**Claims**

1. A system for verifying user identity comprising:

    a conversational system (114) for receiving inputs from a user (110) and transforming the inputs into formal commands by a natural language understanding unit (115) of the system; and
    **characterised by**:
    a behavior verifier (118) for performing verification of the user's identity during usage coupled to the conversational system and including a feature extractor (204) for extracting a set of features from the inputs and constructing a feature vector, the behavior verifier being adapted to compare the set of features to a behavior model to determine if the user is authorized to interact with the system, wherein the set of features includes language model scores characterizing the user's choice of words.

2. The system as recited in claim 1, wherein the inputs include at least one of speech, handwriting, text, and gestures.

3. The system as recited in claim 1, wherein the behavior verifier (118) includes a probability calculator (210), the probability calculator being adapted to calculate a first probability that the user is authorized to interact with the system based on the user's behavior.

4. The system as recited in claim 3, wherein the behavior verifier (118) includes a model constructor (208) for constructing the behavior model (214) for a user, the behavior model being employed by the probability calculator (210) to compare behavior to current behavior of the user.

5. The system as recited in claim 3, further comprising:

an acoustic and biometric verifier (112) for determining acoustic and biometric information from the user and determining a second probability that the user is authorised to interact with the system based on the user's acoustic or biometric information; and
the behavior verifier (118) including a probability mixer (212) adapted for integrating the first probability with the second probability to verify that the user is authorized to interact with the system.

6. A method for verifying a user based on behavior comprising the steps of:

receiving at a conversational system (114) of a system (100), inputs from a user and transforming the inputs into formal commands by a natural language understanding unit (115) of the system;
**characterised by**:

extracting using a behavior verifier coupled to the conversational system for performing verification of the user's identity during usage and including a feature extractor for extracting a set of features from the inputs and constructing a feature vector; and
comparing the set of features to a behavior model (214) to determine if the user is authorized to interact with the system, wherein the set of features includes language model scores characterizing the user's choice of words.

7. The method as recited in claim 6, wherein the inputs include at least one of speech, handwriting, text, and gestures.

8. The method as recited in claim 6, further comprising the step of calculating a first probability in a probability calculator (210), the first probability for indicating whether the user is authorized to interact with the system based on the user's behavior.

9. The method as recited in claim 8, the method further comprising the step of constructing the behavior model for a user, the behavior model being employed to compare behavior to current behavior of the user.

10. The method as recited in claim 8 , further comprising the steps of:

determining acoustic and biometric information from the user;
determining a second probability for indicating whether the user is authorized to interact with the system based on the user's acoustic or biometric information; and
integrating the first probability with the second probability, by employing a probability mixer, to verify that the user is authorized to interact with the system.

11. A program storage device readable by machine, tangibly embodying a program of instructions executable by the machine to perform method steps according to any one of claims 6 to 10.

**Patentansprüche**

1. System zur Verifikation der Benutzeridentität, umfassend:

ein Dialogsystem (114) zum Empfangen von Eingaben von einem Benutzer (110) und zum Umwandeln der Eingaben in formale Befehle durch eine Einheit zum Verstehen natürlicher Sprache (115) des Systems; und
**gekennzeichnet durch**:
einen Verhaltensverifizierer (118) zum Durchführen einer Verifikation der Identität des Benutzers während der Verwendung, gekoppelt mit dem Dialogsystem und einschließend einen Merkmalsextrahierer (204) zum Extrahieren eines Satzes von Merkmalen aus den Eingaben und Konstruieren eines Merkmalvektors, wobei der Verhaltensverifizierer dazu vorgesehen ist, den Satz von Merkmalen mit einem Verhaltensmodell zu vergleichen, um zu bestimmen, ob der Benutzer berechtigt ist, mit dem System zu interagieren, wobei der Satz von Merkmalen Sprachmodellbewertungen enthält, die die Wortwahl des Benutzers beschreiben.

**2.** System nach Anspruch 1, wobei die Eingaben mindestens eines von Sprache, Handschrift, Text und Gesten umfassen.

**3.** System nach Anspruch 1, wobei der Verhaltensverifizierer (118) einen Wahrscheinlichkeitsrechner (210) enthält, wobei der Wahrscheinlichkeitsrechner dazu vorgesehen ist, um eine erste Wahrscheinlichkeit basierend auf dem Benutzerverhalten zu berechnen, dass der Benutzer berechtigt ist, mit dem System zu interagieren.

**4.** System nach Anspruch 3, wobei der Verhaltensverifizierer (118) einen Modellkonstruktor (208) zum Konstruieren des Verhaltensmodells (214) für einen Benutzer enthält, wobei das Verhaltensmodell von dem Wahrscheinlichkeitsrechner (210) verwendet wird, um das Verhalten mit dem aktuellen Verhalten des Benutzers zu vergleichen.

**5.** System wie in Anspruch 3 angegeben, ferner umfassend:

einen akustischen und biometrischen Verifizierer (112) zum Bestimmen von akustischen und biometrischen Informationen des Benutzers und zum Bestimmen einer zweiten Wahrscheinlichkeit, dass der Benutzer berechtigt ist, mit dem System zu interagieren, basierend auf der akustischen oder biometrischen Information des Benutzers,; und
den Verhaltensverifizierer (118), der einen Wahrscheinlichkeitsmischer (212) enthält, der dazu vorgesehen ist, die erste Wahrscheinlichkeit mit der zweiten Wahrscheinlichkeit zu integrieren, um zu verifizieren, dass der Benutzer berechtigt ist, mit dem System zu interagieren.

**6.** Verfahren zum Verifizieren eines Benutzers basierend auf einem Verhalten, umfassend die folgenden Schritte:

Empfangen, an einem Dialogsystem (114) eines Systems (100), von Eingaben von einem Benutzer und Umwandeln der Eingaben in formale Befehle durch eine Einheit zum Verstehen natürlicher Sprache (115) des Systems;
**gekennzeichnet durch**:

Extrahieren unter Verwendung eines mit dem Dialogsystem gekoppelten Verhaltensverifizierers zum Durchführen einer Verifikation der Identität des Benutzers während der Verwendung, und einschließend einen Merkmalsextrahierer zum Extrahieren eines Satzes von Merkmalen aus den Eingaben und Konstruieren eines Merkmalvektors, und
Vergleichen des Satzes von Merkmalen mit einem Verhaltensmodell (214), um zu bestimmen, ob der Benutzer berechtigt ist, mit dem System zu interagieren, wobei der Satz von Merkmalen Sprachmodellbewertungen enthält, die die Wortwahl des Benutzers beschreiben.

**7.** Verfahren nach Anspruch 6, wobei die Eingaben mindestens eines von Sprache, Handschrift, Text und Gesten umfassen.

**8.** Verfahren nach Anspruch 6, ferner umfassend den Schritt des Berechnens einer ersten Wahrscheinlichkeit in einem Wahrscheinlichkeitsrechner (210), wobei die erste Wahrscheinlichkeit basierend auf dem Benutzerverhalten angibt, ob der Benutzer berechtigt ist, mit dem System zu interagieren.

**9.** Verfahren nach Anspruch 8, wobei das Verfahren ferner den Schritt des Konstruierens des Verhaltensmodells für einen Benutzer umfasst, wobei das Verhaltensmodell verwendet wird, um das Verhalten mit dem aktuellen Verhalten des Benutzers zu vergleichen.

**10.** Verfahren nach Anspruch 8, ferner umfassend die folgenden Schritte:
Bestimmen von akustischen und biometrischen Informationen des Benutzers;

Bestimmen einer zweiten Wahrscheinlichkeit zum Angeben, ob der Benutzer berechtigt ist, mit dem System zu interagieren, basierend auf der akustischen oder biometrischen Information des Benutzers; und
Integrieren der ersten Wahrscheinlichkeit mit der zweiten Wahrscheinlichkeit durch Verwenden eines Wahrscheinlichkeitsmischers, um zu verifizieren, dass der Benutzer berechtigt ist, mit dem System zu interagieren.

**11.** Programmspeichervorrichtung, die maschinenlesbar ist und ein Programm von Anweisungen greifbar verkörpert, die von der Maschine ausführbar sind, um Verfahrensschritte nach einem der Ansprüche 6 bis 10 durchzuführen.

**Revendications**

1. Système pour vérifier l'identité d'un utilisateur comprenant :

   un système interactif (114) pour recevoir des entrées d'un utilisateur (110) et pour transformer les entrées en commandes formelles au moyen d'une unité de compréhension de langage naturel (115) du système ; et
   **caractérisé par** :
   un vérificateur du comportement (118) pour réaliser une vérification de l'identité de l'utilisateur pendant une utilisation couplé au système interactif et comprenant un extracteur de caractéristique (204) pour extraire un ensemble de caractéristiques des entrées et pour construire un vecteur de caractéristique, le vérificateur de comportement étant conçu pour comparer l'ensemble de caractéristiques à un modèle de comportement pour déterminer si l'utilisateur est autorisé à dialoguer avec le système, dans lequel l'ensemble de caractéristiques comprend des scores de modèle de langage caractérisant le choix de mots de l'utilisateur.

2. Système selon la revendication 1, dans lequel les entrées comprennent une parole et/ou une écriture et/ou un texte et/ou des gestes.

3. Système selon la revendication 1, dans lequel le vérificateur de comportement (118) comprend un calculateur de probabilité (210), le calculateur de probabilité étant conçu pour calculer une première probabilité que l'utilisateur soit autorisé à dialoguer avec le système en se basant sur le comportement de l'utilisateur.

4. Système selon la revendication 3, dans lequel le vérificateur de comportement (118) comprend un constructeur de modèle (208) pour construire le modèle de comportement (214) pour un utilisateur, le modèle de comportement étant employé par le calculateur de probabilité (210) pour comparer un comportement au comportement actuel de l'utilisateur.

5. Système selon la revendication 3, comprenant en outre :

   un vérificateur acoustique et biométrique (112) pour déterminer des informations acoustiques et biométriques de l'utilisateur et pour déterminer une seconde probabilité que l'utilisateur soit autorisé à dialoguer avec le système en se basant sur les informations acoustiques ou biométriques de l'utilisateur ; et
   le vérificateur de comportement (118) comprenant un mélangeur de probabilités (212) conçu pour intégrer la première probabilité à la seconde probabilité pour vérifier que l'utilisateur est autorisé à dialoguer avec le système.

6. Procédé pour vérifier un utilisateur en se basant sur un comportement comprenant les étapes consistant :

   à recevoir, au niveau d'un système interactif (114) d'un système (100), des entrées d'un utilisateur et à transformer les entrées en commandes formelles au moyen d'une unité de compréhension de langage naturel (115) du système ;
   **caractérisé par** :

   l'extraction, à l'aide d'un vérificateur du comportement couplé au système interactif pour réaliser une vérification de l'identité de l'utilisateur pendant une utilisation et comprenant un extracteur de caractéristique pour extraire un ensemble de caractéristiques des entrées et pour construire un vecteur de caractéristique ; et
   la comparaison de l'ensemble de caractéristiques à un modèle de comportement (214) pour déterminer si l'utilisateur est autorisé à dialoguer avec le système, dans lequel l'ensemble de caractéristiques comprend des scores de modèle de langage caractérisant le choix de mots de l'utilisateur.

7. Procédé selon la revendication 6, dans lequel les entrées comprennent une parole et/ou une écriture et/ou un texte et/ou des gestes.

8. Procédé selon la revendication 6, comprenant en outre l'étape consistant à calculer une première probabilité dans un calculateur de probabilité (210), la première probabilité étant destinée à indiquer si l'utilisateur est autorisé à dialoguer avec le système en se basant sur le comportement de l'utilisateur.

9. Procédé selon la revendication 8, le procédé comprenant en outre l'étape consistant à construire le modèle de comportement pour un utilisateur, le modèle de comportement étant employé pour comparer un comportement au comportement actuel de l'utilisateur.

10. Procédé selon la revendication 8, comprenant en outre les étapes consistant :

à déterminer des informations acoustiques et biométriques de l'utilisateur ;
à déterminer une seconde probabilité pour indiquer si l'utilisateur est autorisé à dialoguer avec le système en se basant sur les informations acoustiques ou biométriques de l'utilisateur ; et
à intégrer la première probabilité à la seconde probabilité, en employant un mélangeur de probabilités, pour vérifier que l'utilisateur est autorisé à dialoguer avec le système.

11. Dispositif de stockage de programme lisible par une machine, incorporant de manière tangible un programme d'instructions pouvant être exécutées par la machine pour réaliser des étapes de procédé selon l'une quelconque des revendications 6 à 10.

**FIG. 1**

**FIG. 2**

**EP 1 470 549 B1**

**Patent documents cited in the description**

- WO 9518441 A

- US 43103499 A